# EUROPEAN PATENT APPLICATION

(11) **EP 1 967 820 A1**
(43) Date of publication of application: **10.09.2008**
(21) Application number: 07004689.1
(22) Date of filing: 07.03.2007
(51) Int. Cl.: G01C 21/36, H04L 29/06, H04L 29/08

(54) **Method and device for controlling a multi media system and method and device for controlling a portable device**

(71) Applicant: Continental Automotive GmbH, 30165 Hannover (DE)
(72) Inventor: Grundlehner, Frederik Bernard, 5616 NZ Eindhoven (NL)

(57) **Abstract**

For controlling a multi media system (6) of a motor vehicle (2) information (INF) from a portable device (8) is received by the multi media system (6) after successfully connecting the multi media system (6) to the portable device (8). The information (INF) represents at least one controllable function (FCT) of the portable device (8). At least one command (COM) is determined dependent on the information (INF) for controlling the portable device (8). The function (FCT) of the portable device (8) is controlled via the multi media system (6) dependent on the command (COM).

## Description

The invention relates to a method and a device for controlling a multi media system of a motor vehicle. Further, the invention relates to a method for controlling a portable device which may be connected to the multimedia system.

A modern motor vehicle may comprise a multi media system. The multi media system may comprise a navigation system, a hifi device, a MP3 player, a DVD player, and/or a car telephone. Some of the available multi media systems for motor vehicles enable to connect a portable device to the multi media system. The connection, for example, is a wireless connection. The portable device may comprise a portable navigation system, a PDA, a mobile phone, an MP3 player, and/or a DVD player. For controlling the portable device via the multi media system, a special software has to be installed on the multi media system. The special software may be integrated in the multi media system and/or may be updated dependent on the portable device. If, for example, a new portable device with new functions enters the market, a new software has to be installed on the multi media system of the motor vehicle.

It is an object of the present invention to create a method and a device for controlling a multi media system of a motor vehicle and/or for controlling a portable device which simply enable a controlling of the portable device through the multi media system of the motor vehicle.

The object of the invention is achieved by the features of the independent claims 1, 5, 7 and 8. Advantageous embodiments are given in the subclaims.

The invention is distinguished concerning a first aspect of the invention by a method for controlling a multi media system of a motor vehicle. The method comprises the steps of receiving information from a portable device after successfully connecting the multi media system to the portable device. The information represents at least one controllable function of the portable device. At least one command is determined dependent on the information for controlling the portable device. The function of the portable device is controlled via the multi media system dependent on the determined command.

This enables to control the portable device via the multi media system without installing any special software on the multi media system. This contributes to make the controlling of the portable device via the multi media system very simple. The information may comprise a name of the function, a property of the function, at least two states which the function may have, the command and/or a class to which the function is assigned. The portable device may be connected to the multi media system by wire or wireless, for example by WLAN and/or by Bluetooth.

In an advantageous embodiment of the first aspect of the invention, at first a request is sent to the portable device regarding the information after successfully connecting the portable device to the multi media system. Afterwards the information of the portable device is received. This may enable to control the portable device without any modification of the portable device and, in particular, to control the function of the portable device without installing any additional software on the portable device.

In a further advantageous embodiment of the first aspect of the invention the determined command is acoustically and/or optically presented to a user of the multi media system. This contributes to that the user knows which function of the portable device he may control via the multi media system.

In a further advantageous embodiment of the first aspect of the invention, the multi media system comprises a speech control and the command comprises a speech command. This contributes to a very comfortable controlling of the portable device via the multi media system.

The invention is distinguished concerning a second aspect of the invention by a method and a device for controlling a portable device. After successfully connecting the portable device to a multi media system of a motor vehicle information is sent to the multi media device. The information represents at least one controllable function of the portable device. The function of the portable device is controlled via the multi media system of the motor vehicle.

This enables that the portable device may be controlled via the multi media system in a simple way. This contributes to that the controlling of the portable device via the multi media system is simple.

In an advantageous embodiment of the first and/or the second aspect of the invention, the request and/or the information is written in XML. This contributes to transmit the information in a simple way, because XML is a well-known and simple language for writing computer programs.

Examplary embodiments of the invention are explained in the following with the help of schematic drawings.

These are as follows:
Figure 1 a motor vehicle,
Figure 2 a flow chart of a program for controlling a multi media system,
Figure 3 a program for controlling a portable device,
Figure 4 information about a function of the portable device written in XML.

Elements with the same design or function that appear in different illustrations are identified by the same reference characters.

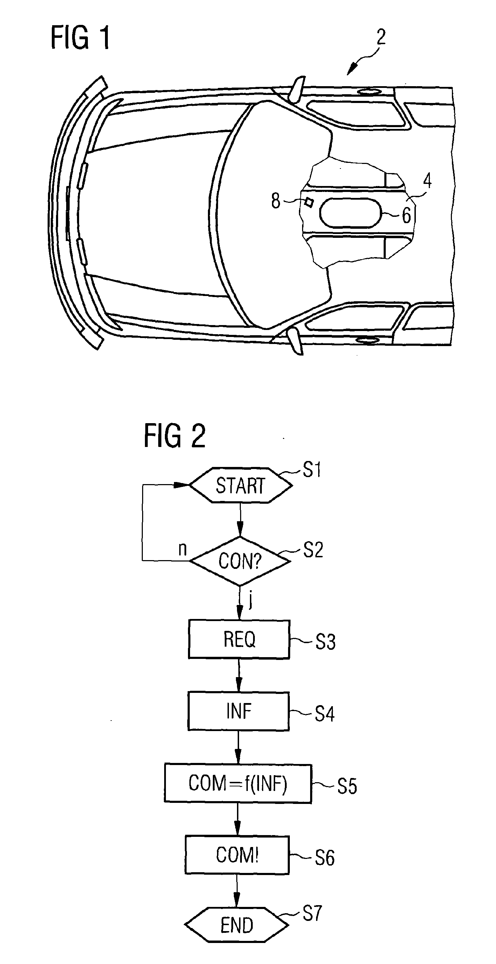

A motor vehicle 2 (figure 1) comprises a centre console 4. A multi media system 6 is arranged in the centre console 4 of the motor vehicle 2. Alternatively, the multi media system 6 of the motor vehicle 2 may be arranged at a different place in the motor vehicle 2. A portable device 8 is connected to the multi media system 6 of the motor vehicle 2. The portable device 8 may be connected to the multi media system 6 by wire. Alternatively, the portable device 8 may be wirelessly connected to the multi media system 6, for example via WLAN and/or via Bluetooth and/or via infrared.

The multi media system 6 may comprise a navigation system, a car radio, an MP3 player, a DVD player, a board computer, and/or a car telephone. The portable device 8 may comprise a MP3 player, a mobile phone, a DVD player, a portable navigation system and/or a pocket computer, for example a PDA.

A program (figure 2) for controlling the multi media system 6 of the motor vehicle 2 is saved on a memory of the motor vehicle 2, in particular, of the multi media system 6. The program for controlling the multi media system 6 enables to control the portable device 8 via the multi media system 6.

The program for controlling the multi media system 6 may be started, if the multi media system 6 is started. The program for controlling the multi media system 6 of the motor vehicle 2 is started in a step S1 in which variables may be initialized.

In a step S2 it is checked whether the portable device 8 has been connected to the multi media system 6 via a connection CON. If the condition of step S2 is false, the program is continued in step S1. If the condition of step S2 is true, the program is continued in a step S3.

In step S3 a request REQ may be sent to the portable device 8 regarding information INF about the portable device 8. Alternatively, the information INF is sent to the multi media system 6 automatically, when the portable device 8 is successfully connected to the multi media system 6.

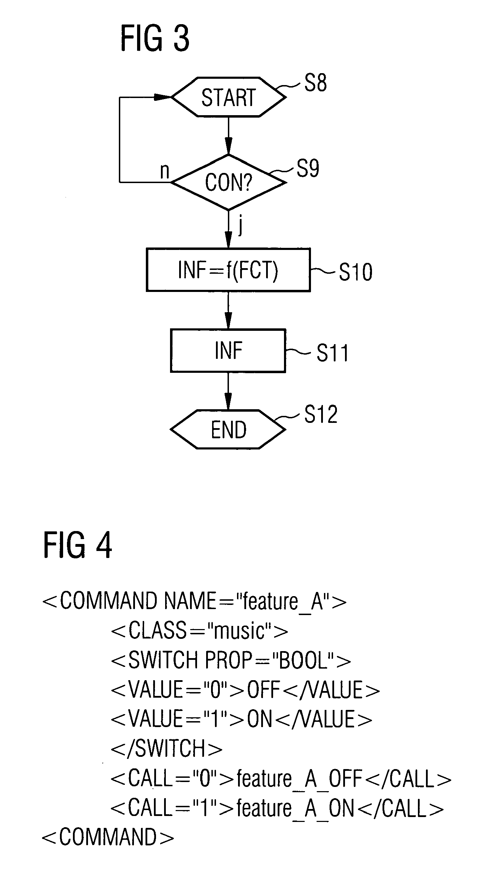

In a step S4 the information INF is sent to the multi media system 6 of the motor vehicle 2. The information INF is representative for a controllable function FCT (figure 3) of the portable device 8. For example, the information INF comprises a function name COMMAND NAME, a function class CLASS, a function property SWITCH PROP of the function FCT and/or a value VALUE of a state which the function FCT may have. Preferably, the function FCT is one of those functions FCT of the portable device 8 which enable the user of the portable device 8 to control the portable device 8 directly.

In a step S5 the multi media system 6 determines a command COM dependent on the information INF of the portable device 8.

Preferably, the command COM is presented to a user of the multi media system 6 in a step S6. The command COM may be presented to the user optically, for example via a display, and/or acoustically, for example via loudspeakers.

In a step S7 the program for controlling the multi media system 6 may be terminated. The program for controlling the multi media system 6 may however also be worked through regularly during the multi media system's 6 operating.

After receiving the command COM, the user is able to enter the command COM into the multi media system 6 and to control the portable device 8 via the multi media system 6. For example, the user enters the command COM into a key field of the multi media system 6 and/or the user may press a button which represents the command COM on a touch screen of the multi media system 6 and/or the user enters the command COM as a speech command via speech so that a speech recognition system of the multi media system 6 translates the speech command in such a way that the portable device 8 is controllable via the speech command. If the user wants to control the transportable device via the multi media system, for example via the speech command or via the touch screen, the command of the user is assigned to the command COM. The command COM is sent to the portable device 8 and the portable device 8, in particular, the function FCT of the portable device 8 is controlled via the multi media system 6.

A program for controlling the portable device 8 is saved on a memory of the portable device 8 (figure 3). The program for controlling the portable device 8 enables the portable device 8 to send the information INF to the multi media system 6 of the motor vehicle 2. The program for controlling the portable device 8 may in particular be started when the portable device 8 is started.

The program for controlling the portable device 8 is started in a step S8 in which variables may be initialized.

In a step S9 it is checked whether the portable device 8 has been connected to the multi media system 6 via the connection CON. If the condition of step S9 is true, the program for controlling the portable device 8 is continued in a step S10. If the condition of step S9 is false, the program for controlling the portable device 8 is continued in step S8.

In step S10, the information INF is determined dependent on the function FCT of the portable device 8. Preferably, the information INF represents many, for example, all controllable functions FCT of the portable device 8.

In a step S11, the information INF is sent to the multi media system 6 of the motor vehicle 2.

In a step S12 the program for controlling the portable device 8 may be terminated. The program for controlling the portable device 8 may however also be worked through regularly during the operation of the portable device 8.

The information INF may be written in a computer language (figure 4), for example XML. Then, lines of the program text of the information INF may have the form presented in Figure 4. The function name COMMAND NAME may be for example "feature_A". The function class CLASS may be "music". The function class enables to order to the functions FCT in a hierarchical manner. The function properties SWITCH PROP may be, for example, Boolean BOOL. The function property SWITCH PROP may also be "dynamic", for example a play list may is dynamic because the amount of states depends on the number of entries in the play list. So "dynamic" means in this context, that the amount of states which the function FCT may has is not fixed. The internal value of the function FCT may be 0 or 1 representative for off OFF and on ON respectively which may be presented to the user on the display, for example as labels on touch screen buttons of the touch screen. Additinally to the representatives on ON and off OFF these words may be given to the multi media system 6 in phonetic alphabet. This may support the multi media system 6 in understanding the speech command. Further commands may be also given to the multi media system 6 in phonetic alphabet. A function control SWITCH defines how the function FCT may be controlled. A call CALL representative for the value 0, for example, leads to sending a command "feature_A_OFF" to the portable device which turns the feature_A off OFF and the call CALL representative for the value 1 leads to sending a command "feature_A_ON" to the portable device 8 which turns the feature_A on ON. Then, an end command COMMAND of the function assignment is sent.

The invention is not restricted to the explained embodiments. For example, the program for controlling the multi media system 6 and/or the program for controlling the portable device 8 may be implemented in one or further programs. Further, the portable device 8 may be connected automatically to the multi media system 6 of the motor vehicle 2, if the portable device 8 is within the range of the wireless connection. Then, the information INF may be sent automatically to the multi media system 6.

### Reference numerals:

- 2: motor vehicle
- 4: centre console
- 6: multi media system
- 8: portable device

- START: start of program
- CON: connection
- REQ: request
- INF: information
- COM: command
- END: end of program
- j: condition true
- n: condition false
- FCT: function
- S1 - S12: steps one to twelve

- COMMAND NAME: function name
- CLASS: function class
- SWITCH PROP: function property
- VALUE: Value
- OFF: Off
- ON: On
- SWITCH: function control
- CALL: call
- COMMAND: end of function assignment

## Claims

1. Method for controlling a multi media system (6) of a motor vehicle (2) comprising the steps of
- receiving information (INF) from a portable device (8) after successfully connecting the multi media system (6) to the portable device (8), with the information (INF) representing at least one controllable function (FCT) of the portable device (8),
- determining at least one command (COM) dependent on the information (INF) for controlling the portable device (8),
- controlling the function (FCT) of the portable device (8) via the multi media system (6) dependent on the determined command (COM).

2. Method in accordance with claim 1 wherein at first a request (REQ) is sent to the portable device (8) regarding the information (INF) after successfully connecting the portable device (8) to the multi media system (6) and wherein afterwards the information (INF) of the portable device (8) is received.

3. Method in accordance with one of the preceding claims wherein the determined command (COM) is acoustically and/or optically presented to a user of the multi media system (6).

4. Method in accordance with one of the preceding claims, wherein the multi media system (6) comprises a speech control and wherein the command (COM) comprises a speech command.

5. Method for controlling a portable device (8) wherein after successfully connecting the portable device (8) to a multi media system (6) of a motor vehicle (2) information (INF) is sent to the multi media device (6), with the information (INF) representing at least one controllable function (FCT) of the portable device (8) and with the function (FCT) of the portable device (8) being controlled via the multi media system (6) of the motor vehicle (2).

6. Method in accordance with one of the preceding claims with the request (REQ) and/or the information (INF) being written in XML.

7. Device for controlling a multi media system (6) of a motor vehicle (2), the device being arranged for
- receiving information (INF) from a portable device (8) after successfully connecting the portable device (8) to the multi media system (6), with the information (INF) representing at least one controllable function (FCT) of the portable device (8),
- determining at least one command (COM) dependent on the information (INF) for controlling the portable device (8),
- controlling the function (FCT) of the portable device (8) via the multi media system (6) dependent on the command (COM).

8. Device for controlling a portable device (8), the device being arranged for sending information (INF) to a multi media system (6) of a motor vehicle (2) after successfully connecting the portable device (8) to the multi media device (6), with the information (INF) representing at least one controllable function (FCT) of the portable device (8) and with the function (FCT) of the portable device (8) being controlled via the multi media system (6) of the motor vehicle (2).
